(19) **Europäisches Patentamt European Patent Office Office européen des brevets**

(11) **EP 3 620 639 A1**

(12) **DEMANDE DE BREVET EUROPEEN**

(43) Date de publication:
**11.03.2020 Bulletin 2020/11**

(51) Int Cl.:
*F02D 41/10* $^{(2006.01)}$        *F02D 41/30* $^{(2006.01)}$
*F02D 41/40* $^{(2006.01)}$        *F02D 35/02* $^{(2006.01)}$
*F02D 41/00* $^{(2006.01)}$

(21) Numéro de dépôt: **19195613.5**

(22) Date de dépôt: **05.09.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.09.2018 FR 1858032**

(71) Demandeur: **RENAULT s.a.s.**
**92100 Boulogne-Billancourt (FR)**

(72) Inventeurs:
• **LEFEBRE, CEDRIC**
**91510 LARDY (FR)**
• **VERBEKE, BENOIT**
**78690 LES ESSARTS LE ROI (FR)**

(54) **PROCÉDÉ DE RÉGULATION DE LA COMBUSTION DANS UN MOTEUR DIESEL À COMBUSTION HOMOGÈNE OU QUASI-HOMOGÈNE**

(57) Procédé (10) de régulation de la combustion dans un moteur Diesel à combustion homogène ou quasi-homogène comprenant au moins deux cylindres (il, i2) dont chacun est équipé d'un capteur de pression de cylindre, dans lequel on calcule pour chaque cylindre (il, i2), au cycle de combustion (n-1) déjà réalisé, un écart (*Err_cyl.i1*$_{[n-1]}$, *Err_cyl.i2*$_{[n-1]}$) entre une consigne et une valeur d'un paramètre représentatif de la combustion déterminée à l'aide dudit capteur de pression de cylindre , et dans lequel on calcule pour chaque cylindre (il, i2), au cycle de combustion (n) à venir, une correction (*Corr_cyl.i1*$_{[n]}$, *Corr_cyl.i2*$_{[n]}$) de la valeur d'un paramètre représentatif de l'injection de carburant dans le cylindre (il, i2) à appliquer sur ledit cycle (n) à venir en fonction desdits écarts (*Err_cyl.i1*$_{[n-1]}$, *Err_cyl.i2*$_{[n-1]}$) au cycle (n-1) déjà réalisé de tous les cylindres (il, i2) et d'un coefficient (a) caractérisant la variation des conditions de combustion du moteur entre deux cycles.

EP 3 620 639 A1

**Description**

La présente invention concerne le domaine des moteurs à combustion interne, notamment des moteurs de type Diesel.

Plus particulièrement, la présente invention concerne le domaine de la commande de la combustion d'un moteur à combustion homogène ou homogeneous charge compression ignition, d'acronyme « HCCI » en termes anglo-saxons, par opposition aux moteurs à combustion à charge hétérogène ou stratifiée.

Un moteur à combustion homogène est une catégorie de moteur à combustion interne à allumage par compression dans lequel le mélange air-carburant est rendu le plus homogène possible, tel que cela est réalisé dans les moteurs à allumage commandé fonctionnant à l'essence. Le mélange air-carburant est fortement comprimé afin de permettre l'auto-allumage dudit mélange.

Contrairement aux moteurs à combustion à charge stratifiée pour lesquels la combustion démarre aux frontières entre l'air et le carburant injecté, la combustion d'un moteur à combustion homogène démarre en plusieurs endroits à la fois, ce qui provoque une combustion de la totalité du mélange air-carburant quasi simultanée. Cela permet d'obtenir des émissions d'oxydes d'azote ($NO_x$) très faibles en vue de répondre aux normes de dépollutions de plus en plus strictes.

Toutefois, il est connu que pour fonctionner correctement, un tel moteur à combustion homogène nécessite une modification importante de la géométrie des chambres de combustion du moteur par rapport à un moteur Diesel classique à combustion à charge stratifiée. En effet, afin que le mélange air-carburant puisse être le plus homogène possible, le carburant est injecté dès le début du temps de compression du moteur, par exemple peu après le point mort bas (PMB) du piston dans la chambre de combustion considérée.

Pour que le carburant ait le temps de se mélanger de manière homogène à l'air pendant la durée du temps de compression du cycle moteur, c'est-à-dire pendant la remontée du piston depuis le point mort bas jusqu'au point mort haut (PMH) dudit piston, correspondant au début du temps de combustion-détente dans le cylindre, il convient que le carburant puisse pénétrer le plus loin possible dans la chambre de combustion matérialisé par la tête de piston au point mort bas. Il est donc nécessaire de modifier la forme du bol du piston ainsi que l'angle de jet du carburant dans ladite chambre.

De plus, le jet de carburant doit avoir une direction de jet nettement plus centrée sur l'axe central de symétrie du piston que dans le cas d'un moteur à charge stratifiée, la direction du jet formant un ange inférieur à 50° par rapport à l'axe du piston. De telles modifications sont complexes à réaliser.

Une autre solution consiste à conserver la géométrie classique de la chambre de combustion d'un moteur classique à charge stratifiée et à remplacer le mode de combustion homogène par un mode de combustion quasi homogène appelé « mild HCCI » en termes anglo-saxons, dans lequel la charge est partiellement mélangée.

Dans un mode de combustion à charge stratifiée, l'injection de carburant comporte au moins une injection principale de carburant au voisinage du point mort haut du piston. L'injection peut également comporter, avant l'injection principale, une pré-injection d'au moins une quantité significativement plus faible de carburant, qui est séparée de l'injection principale d'une durée pendant laquelle l'injecteur de carburant reste fermé et aucun carburant n'est injecté.

On peut également prévoir deux pré-injections successives. L'injection peut encore comprendre au moins une post-injection d'une faible quantité de carburant.

Dans le mode de combustion à charge homogène, le carburant est entièrement injecté peu après le point mort bas, c'est-à-dire, par exemple, à partir de 180 ° d'angle de vilebrequin (°vlb) avant le point mort haut.

Dans le mode de combustion à charge partiellement pré-mélangée, l'injection de carburant est répartie en deux demi-séquences d'injections successives. La première demi-injection principale correspond à une injection importante intervenant plus tard dans le cycle de combustion que l'injection dans le cas de la combustion à charge homogène. Cette première demi-injection débute, par exemple, dans le premier quart de tour du vilebrequin avant que le piston n'atteigne le point mort haut et se termine avant que le piston n'atteigne le point mort haut. La deuxième demi-injection débute dans la foulée de la première injection dans la dernière phase de remontée du piston vers le point mort haut.

Des stratégies de recalage de la combustion d'un tel moteur Diesel par utilisation de capteur de pression du cylindre sont connues et permettent de réduire les émissions polluantes du moteur, ainsi que de piloter les réglages pour éviter de générer des instabilités de combustion. De telles stratégies sont indispensables dans le cas de combustion homogène ou quasi-homogène qui sont des modes de combustion ayant une forte tendance à l'instabilité.

De telles stratégies sont ainsi utilisées afin de corriger, par des boucles de rétroaction :

- le phasage de l'injection, ou
- la quantité totale de carburant injectée, ou
- la quantité de carburant injectée lors d'une pré-injection,...

à partir de la comparaison :

- de l'angle de combustion de 50% de la charge brûlée (CA50) avec une consigne calibrée de CA50 sur le point de fonctionnement considéré du moteur ; ou
- de la valeur du couple déterminée grâce au capteur de pression cylindre avec une consigne de couple indiqué ; ou
- du dégagement d'énergie liée à cette injection avec le dégagement d'énergie totale ou le délai d'auto-inflammation....

Par exemple, un pilotage en boucle fermée du centroïde de combustion, c'est-à-dire de l'angle de combustion pour lequel la moitié de la charge est brûlée, désigné de manière connue par l'acronyme CA50, peut être réalisé au moyen de capteurs de pression dans les chambres de combustion pour améliorer la stabilité de l'injection. On peut se référer à cet égard au document EP 1 607 609 - B1 qui prévoit une telle commande du centroïde de combustion.

En pratique, on procède à des corrections d'injection de carburant, qui consistent en une modification du réglage nominal (par exemple issu de cartographies) par ajout d'un biais ou offset (positif ou négatif) de phasage de l'injection ou du débit de l'injection principale ou d'une pré-injection.

Cet offset est calculé, soit par un terme proportionnel, soit par un contrôleur de type régulateur proportionnel intégral.

Selon l'état de la technique, une mise en oeuvre particulièrement simple consiste à appliquer une correction du phasage de l'injection de carburant, dans un cylindre donné, dans les mêmes proportions que l'écart de CA 50 constaté au cycle de combustion précédent dans le même cylindre. En d'autres termes, si sur un cylindre donné, lors d'un cycle de combustion donné, on constate que le CA50 est décalé d'une valeur égale à un degré de vilebrequin (1°vlb respectivement en plus ou en moins) par rapport à une consigne correspondant au point de fonctionnement du moteur, on corrige ensuite aussi d'une valeur égale à un degré de vilebrequin (1°vlb respectivement en plus ou en moins), sur le cycle de combustion suivant se déroulant dans le même cylindre, le phasage de l'injection de carburant, c'est-à-dire la valeur de l'angle de vilebrequin à partir duquel on commence à injecter le carburant. Les combustions réalisées entre-temps dans les autres cylindres ne sont pas du tout prises en compte.

Le CA50 peut être calculé, à chaque cycle, par des procédés connus, tel que par exemple : en temps réel par le calculateur moteur sur les moteurs multicylindres équipés d'un capteur de pression cylindre par cylindre ou d'un capteur plusieurs cylindres.

En effet, le dégagement d'énergie apparent est calculé par l'application du premier principe de la thermodynamique selon l'équation suivante :

$$\int_{\theta} \mathrm{dQ_{COMB}} = \int m.\mathrm{C_V}.d\left(\frac{P.V}{n.R}\right) + PdV \qquad \textbf{EQ.1}$$

L'intégrale du dégagement d'énergie peut être reliée à la masse du carburant introduite par l'équation suivante :

$$\Delta Q_{COMB} = (M_{carburant\_brulée} - M_{imbrûlée}).PCI \qquad \textbf{EQ.2}$$

Avec :

PCI, le pouvoir calorifique inférieur.

Pour un moteur Diesel, la part du carburant imbrûlé peut être négligée.

La mesure de la pression cylindre fournie à chaque instant par le capteur de pression cylindre et la valeur du volume V, image de la position dans le cylindre, est calculée selon l'équation suivante :

$$V(\alpha) = V_{cc} + \frac{\pi D^2}{4}\left[l + r\left(1 - \cos(\alpha)\right) - \sqrt{l^2 - r^2 \sin(\alpha)^2}\right] \qquad \textbf{EQ.3}$$

Avec :

Vcc, le volume mort au point mort haut ;
l, la longueur de la bielle ;
r, le rayon du maneton ; et
a, l'angle vilebrequin, donné par les capteurs de position angulaire vilebrequin et arbre à cames nécessaires au fonctionnement du système d'injection.

On en déduit l'angle CA50 comme l'angle vilebrequin pour lequel le calcul intégral du dégagement d'énergie atteint la moitié de la valeur du dégagement total de chaleur à produire par la masse de carburant introduite dans le cylindre.

Dans un tel procédé de correction du CA50 en agissant sur le phasage de l'injection de carburant, on a donc :

- un terme statique de consignes d'injection de carburant, ou plus précisément d'un paramètre représentatif de l'injection de carburant (phasage, ou débit de pré-injection, ou débit total...), qui ne considère par les dispersions cylindre à cylindre, les dispersions des composants, le déroulement réel de la combustion en temps réel,
- un terme correctif issu d'un régulateur, dont l'objectif est d'atteindre une cible d'un paramètre représentatif du déroulement de la combustion (couple, CA50, délai d'inflammation...), alimenté par un capteur de pression cylindre.

La problématique d'un tel procédé de recalage est qu'il s'agit de boucles de rétroaction lentes, notamment dans les phases transitoires du moteur, lors d'une forte accélération par exemple. En effet, du fait des dispersions entre les cylindres (écart de comportement entre injecteurs, écart de taux de compression entre les cylindres, etc...), chaque mesure de pression cylindre, sur un cylindre i ne peut corriger que les consignes d'injections de ce cylindre i, soit deux tours moteurs (ou quatre points morts hauts) plus tard sur un moteur à quatre temps.

Or, en phase transitoire, en deux tours moteurs, les conditions de combustion (pression du collecteur, masse d'air admise, taux de gaz recirculés, masse d'oxygène enfermée, etc...) comme les consignes d'injection évoluent significativement.

Les procédés connus de régulation de la combustion par mesure de la pression cylindre ne permettent pas de corriger efficacement l'injection dans ces phases transitoires rapides.

En effet, au cycle de combustion n à réaliser, la correction d'injection, plus précisément la correction d'un paramètre représentatif de l'injection de carburant permettant de contrôler la combustion sur le cylindre i s'exprime, dans la mise en oeuvre simple qui vient d'être exposée, selon l'équation suivante :

$$Corr\_Cyl.i_{[n]} = Err\_cyl.i_{[n-1]} \hspace{3cm} EQ.4$$

Avec :

$Corr\_Cyl.i_{[n]}$, la correction sur le cylindre i d'un paramètre représentatif de l'injection de carburant, par exemple de phasage d'injection, de quantité de carburant injecté ou de débit de pré-injection à appliquer sur le cycle n à venir ; et $Err\_cyl.i_{[n-1]}$, l'écart entre la consigne et la mesure d'un paramètre représentatif de la combustion, par exemple un écart de CA50, de couple, de délai d'inflammation..., sur le cycle précédent n-1 dont la combustion est terminée dans le même cylindre i.

Il existe un besoin d'améliorer les procédés de régulation de la combustion.

Le but de la présente invention est donc de permettre une régulation efficace de la combustion lors des phases transitoires rapides du moteur, c'est-à-dire lors de modifications rapides du point de fonctionnement régime/charge du moteur, qui implique des consignes de CA50 (ou en variante des consignes d'un autre paramètre représentatif de la combustion) très rapidement variables entre les cycles de combustion rapprochés.

L'invention a pour objet un procédé de régulation de la combustion dans un moteur Diesel à combustion homogène ou quasi-homogène comprenant au moins deux cylindres dont chacun est équipé d'un capteur de pression de cylindre, dans lequel on calcule pour chaque cylindre, au cycle de combustion déjà réalisé, un écart entre une consigne et une valeur d'un paramètre représentatif de la combustion déterminée à l'aide dudit capteur de pression de cylindre, et dans lequel on calcule pour chaque cylindre, au cycle de combustion à venir, une correction de la valeur d'un paramètre représentatif de l'injection de carburant dans le cylindre à appliquer sur le cycle de combustion à venir, en fonction desdits écarts au cycle déjà réalisé de tous les cylindres et d'un coefficient caractérisant la variation des conditions de combustion du moteur entre deux cycles.

Ainsi, on obtient une correction glissante des cylindres permettant d'améliorer la dynamique des corrections en phase transitoire du moteur.

Par exemple, pour un moteur à deux cylindres, on calcule une correction de l'injection sur un premier cylindre au cycle à venir, tel que, par exemple, une modification du phasage d'injection, une modification de la quantité de carburant injecté ou d'un débit de pré-injection à appliquer sur le cycle n à venir, en fonction d'un écart de CA50 (ou d'un autre paramètre représentatif de la combustion) dudit cylindre au cycle précédent déjà réalisé et de l'écart de CA50 du deuxième cylindre au cycle précédent déjà réalisé et d'un coefficient caractérisant la variation des conditions de combustion du moteur entre deux cycles. On tient ainsi compte de l'état de la combustion qui a été constaté dans le deuxième cylindre au cycle précédent, cette dernière combustion étant intervenue après la combustion qui s'est déroulée dans le premier cylindre au cycle précédent.

Avantageusement, le coefficient caractérisant la variation des conditions de combustion du moteur entre deux cycles est compris entre 0 et 1.

Par exemple ledit coefficient dépend d'un gradient de régime, d'un gradient de couple, d'un gradient de la pression du collecteur d'admission du moteur et d'un gradient de taux de gaz d'échappement recyclés à l'admission.

Ledit paramètre représentatif de la combustion dans un cylindre est par exemple choisi parmi :

- un angle de combustion CA50 de la moitié de la charge dans ledit cylindre ; ou
- une valeur de couple produit par la combustion de la charge dans ledit cylindre ; ou
- un délai d'auto-inflammation de la charge dans ledit cylindre.

Ledit paramètre représentatif de l'injection de carburant dans un cylindre est par exemple choisi parmi :

- le phasage de l'injection de carburant dans ledit cylindre ; ou,
- la quantité totale de carburant injectée dans ledit cylindre ; ou,
- la quantité de carburant injectée lors d'une pré-injection dans ledit cylindre.

D'autres buts, caractéristiques et avantages de l'invention apparaîtront à la lecture de la description suivante, donnée uniquement à titre d'exemple non limitatif, et faite en référence à la figure unique illustrant un procédé 10 de régulation de la combustion dans un moteur Diesel à combustion homogène ou quasi-homogène comprenant des capteurs de pression cylindre (non référencés) dans chaque cylindre et au moins deux cylindres i1, i2, voire trois cylindres i1, i2, i3, voire quatre cylindres i1, i2, i3, i4.

Le procédé 10 comprend une étape 12 de calcul d'un premier écart $Err\_cyl.i1_{[n-1]}$ entre une consigne et une valeur d'un paramètre représentatif de la combustion sur un premier cylindre i1 au cycle n-1 déjà réalisé. Ladite valeur est déterminée de manière connue grâce au capteur de pression de cylindre présent dans ledit premier cylindre i1. Le paramètre représentatif de la combustion peut être notamment un centroïde de combustion CA50, un couple développé par la combustion, ou un délai d'inflammation du mélange air-carburant.

Le procédé comprend une étape 14 de calcul d'un deuxième écart $Err\_cyl.i2_{[n-1]}$ entre une consigne et une valeur d'un paramètre représentatif de la combustion sur un deuxième cylindre i2 au cycle précédent n-1 déjà réalisé. Bien entendu, ledit paramètre est le même que le paramètre déjà retenu pour le premier cylindre i1.

Le procédé 10 comprend une étape 16 de calcul d'une correction $Corr\_cyl.i1_{[n]}$ d'un paramètre représentatif de la combustion sur le premier cylindre i1 au cycle n à venir, tel que, par exemple, une valeur de phasage d'injection, une modification de la quantité de carburant injecté ou du débit de pré-injection à appliquer sur le cycle n à venir, en fonction du premier écart $Err\_cyl.i1_{[n-1]}$ dudit cylindre i1 au cycle précédent n-1 déjà réalisé et du deuxième écart $Err\_cyl.i2_{[n-1]}$ du deuxième cylindre i2 au cycle précédent n-1 déjà réalisé.

De la même manière, le procédé 10 comprend une étape 18 de calcul d'une correction $Corr\_cyl.i2_{[n]}$ de la combustion sur le deuxième cylindre i2 au cycle n à venir, tel que, par exemple, une valeur de phasage d'injection, une modification de la quantité de carburant injecté ou du débit de pré-injection à appliquer sur le cycle n à venir, en fonction du deuxième écart $Err\_cyl.i2_{[n-1]}$ dudit cylindre i2 au cycle précédent n-1 déjà réalisé et du premier écart $Err\_cyl.i1_{[n-1]}$ du premier cylindre i1 au cycle précédent n-1 déjà réalisé.

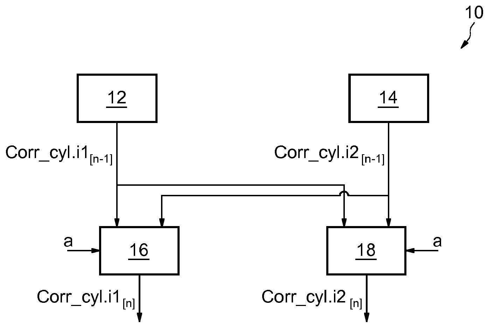

Dans un mode non représenté par la figure 1, pour un moteur à quatre cylindres, avec un ordre d'allumage classique [1 3 4 2], on obtient :

$$Corr\_Cyl.i1_{[n]} = \alpha*Err\_cyl.i1_{[n-1]} + \beta*Err\_cyl.i2_{[n-1]} + \gamma*Err\_cyl.i4_{[n-1]} + \delta*Err\_cyl.i3_{[n-1]}$$

$$Corr\_Cyl.i2_{[n]} = \alpha*Err\_cyl.i2_{[n-1]} + \beta*Err\_cyl.i4_{[n-1]} + \gamma*Err\_cyl.i3_{[n-1]} + \delta*Err\_cyl.i1_{[n-1]}$$

$$Corr\_Cyl.3_{[n]} = \alpha*Err\_cyl.i3_{[n-1]} + \beta*Err\_cyl.i1_{[n-1]} + \gamma*Err\_cyl.i2_{[n-1]} + \delta*Err\_cyl.i4_{[n-1]}$$

$$Corr\_Cyl.i4_{[n]} = \alpha * Err\_cyl.i4_{[n-1]} + \beta * Err\_cyl.i3_{[n-1]} + \gamma * Err\_cyl.i1_{[n-1]} + \delta * Err\_cyl.i2_{[n-1]}$$

Avec :

$\alpha + \beta + \gamma + \delta = 1$ de sorte à bien réaliser une moyenne pondérée de corrections, et avec en outre de préférence $\alpha \geq \beta \geq \gamma \geq \delta \geq 0$.

On comprend des équations précédentes que, pour déterminer sur un cylindre donné (par exemple le premier cylindre i1) la correction à appliquer au cycle de combustion de rang n, on tient compte non seulement de l'écart de combustion $Err\_cyl.i1_{[n-1]}$ constaté sur ce même cylindre lors du cycle de rang n-1 qui s'y est déroulé deux tours de vilebrequin plus tôt, mais aussi des autres écarts de combustion constatés entre-temps sur les autres cylindres (c'est-à-dire : strictement moins que deux tours de vilebrequin avant le cycle de combustion de rang n sur le cylindre i1).

L'inéquation $\alpha \geq \beta \geq \gamma \geq \delta \geq 0$, si elle est vérifiée, indique que pour déterminer la correction à apporter à un cylindre donné (par exemple le cylindre i1), on tient compte de manière plus importante des combustions intervenues le plus récemment sur le moteur.

Toutefois, en pratique, si on se concentre sur des corrections d'injection de carburant cylindre à cylindre issues plus particulièrement d'un contrôle du centroïde de combustion CA50, du fait du délai nécessaire à l'obtention de la valeur calculée du CA50 sur un cylindre donné, qui correspond à la fin de la détente dans le cylindre, une telle valeur de CA50 n'est pas disponible suffisamment tôt pour pouvoir en tenir compte dans l'application de la correction sur le cylindre qui suit immédiatement dans l'ordre d'allumage du moteur (c'est-à-dire : 180° vlb plus tard pour un moteur à 4 cylindres).

Dans ce cas, on ne peut plus respecter la condition $\alpha \geq \beta \geq \gamma \geq \delta \geq 0$, car on devra donc considérer que le terme $\beta$ est nul, au prix d'une perte de précision du procédé selon l'invention car on ne peut pas tenir compte de la combustion intervenue le plus récemment dans le moteur. On obtient alors les équations suivantes sous la forme modifiée suivante :

$$Corr\_Cyl.i1_{[n]} = a * Err\_cyl.i1_{[n-1]} + (1-a) * ((1-a) * Err\_cyl.i4_{[n-1]} + a * Err\_cyl.i3_{[n-1]})$$

$$Corr\_Cyl.i2_{[n]} = a * Err\_cyl.i2_{[n-1]} + (1-a) * ((1-a) * Err\_cyl.i3_{[n-1]} + a * Err\_cyl.1_{[n-1]})$$

$$Corr\_Cyl.i3_{[n]} = a * Err\_cyl.i3_{[n-1]} + (1-a) * ((1-a) * Err\_cyl.i2_{[n-1]} + a * Err\_cyl.i4_{[n-1]})$$

$$Corr\_Cyl.i4_{[n]} = a * Err\_cyl.i4_{[n-1]} + (1-a) * ((1-a) * Err\_cyl.i1_{[n-1]} + a * Err\_cyl.i2_{[n-1]})$$

Avec a, un coefficient de pondération compris entre 0 et 1.

Plus le coefficient « a » est faible, plus on prend en compte les écarts de combustion (par exemple : écarts de CA50) des précédents cylindres, plus « a » est grand, plus on considère que la correction d'injection du cylindre numéro i ne doit s'appliquer que sur le cylindre i :

- Si a =1 ; on n'applique sur le cylindre il, qu'un correctif d'injection égal à l'écart de combustion (CA50 par exemple) du cylindre il. C'est typiquement le cas en stabilisé, ou croiser les corrections entre les cylindres n'a pas d'intérêt, puisque les conditions de combustion n'ont pas changé d'un calcul à l'autre.
- Si a =0.5 ; on applique sur le cylindre il, un correctif d'injection qui est égal à une moyenne à 50% entre l'écart de combustion du cylindre il (datant d'il y a 4 PMH) + 25% de l'écart de combustion du cylindre i3 (datant d'il y a trois PMH) + 25% de l'écart de combustion du cylindre i4 (datant d'il y a deux PMH)
- Si a =0.3 ; on applique sur le cylindre il, un correctif d'injection qui est égal à une moyenne à 33% entre écart de combustion du cylindre il (datant d'il y a quatre PMH) + 21% de l'écart de combustion du cylindre i3 (datant d'il y a trois PMH) + 49% de l'écart de combustion du cylindre i4 (datant d'il y a deux PMH)

- Si a =0 ; on n'applique sur le cylindre il, qu'un correctif d'injection égal à l'écart de combustion du cylindre i4 datant d'il y a deux PMH.

Dans le cas d'un moteur à trois cylindres avec un ordre d'allumage noté [1 2 3], les informations de pression cylindre d'un cylindre précédent sont bien disponibles avant le PMH injection du cylindre suivant, car on dispose de 240°vlb pour calculer le centroïde de combustion CA50. On peut donc dans la pratique prévoir que β≠0), et on peut écrire les précédentes équations, sous la forme suivante :

$$\text{Corr\_Cyl.i1}_{[n]} = a * \text{Err\_cyl.i1}_{[n-1]} + (1-a) * ((1-a) * \text{Err\_cyl.i3}_{[n-1]} + a * \text{Err\_cyl.2}_{[n-1]})$$

$$\text{Corr\_Cyl.i2}_{[n]} = a * \text{Err\_cyl.i2}_{[n-1]} + (1-a) * ((1-a) * \text{Err\_cyl.i1}_{[n-1]} + a * \text{Err\_cyl.i3}_{[n-1]})$$

$$\text{Corr\_Cyl.i3}_{[n]} = a * \text{Err\_cyl.i3}_{[n-1]} + (1-a) * ((1-a) * \text{Err\_cyl.i2}_{[n-1]} + a * \text{Err\_cyl.i1}_{[n-1]})$$

Selon l'invention, le coefficient « a » présent dans les équations précédentes permet d'améliorer sensiblement la précision du procédé de régulation de la combustion d'un moteur à combustion homogène ou quasi-homogène quand celui-ci fonctionne dans des conditions transitoires. En effet, dans une telle phase transitoire, on ne peut pas seulement considérer une correction d'injection sur un cylindre qui est calculée d'après une information d'écart de combustion sur le même cylindre, qui a donc quatre PMH de retard. Il vaut mieux se fier aux autres cylindres venant de finir leurs cycles de combustion plus récemment (tout au moins ceux pour lesquels la valeur d'écart de combustion est disponible, ce qui n'est pas forcément le cas du cylindre qui vient de finir le dernier cycle de combustion en date sur le moteur).

Ce coefficient « a » est donc caractéristique de la variation des conditions de combustion du moteur entre deux cycles de combustion et peut par exemple s'écrire de la façon suivante :

$$a = \text{K1}_{f(\text{gradient de régime})} * \text{K2}_{f(\text{gradient de couple})} * \text{K3}_{f(\text{gradient de pression collecteur})} * \text{K4}_{f(\text{gradient de taux d'EGR})}$$

Avec :
K1, K2, K3 et K4 sont des fonctions croissantes, respectivement du gradient de régime, de couple, de la pression du collecteur d'admission du moteur ou du taux d'EGR (recyclage partiel des gaz d'échappement à l'admission).

Grace à l'invention, on peut limiter les effets des retards de la combustion en boucle fermée par utilisation de capteurs de pression cylindre dans les phases transitoires du moteur.

**Revendications**

1. Procédé (10) de régulation de la combustion dans un moteur Diesel à combustion homogène ou quasi-homogène comprenant au moins deux cylindres (il, i2) dont chacun est équipé d'un capteur de pression de cylindre, dans lequel on calcule pour chaque cylindre (il, i2), au cycle de combustion (n-1) déjà réalisé, un écart *(Err_cyl.i1*$_{[n-1]}$*, Err_cyl.i2*$_{[n-1]}$*)* entre une consigne et une valeur d'un paramètre représentatif de la combustion déterminée à l'aide dudit capteur de pression de cylindre, et dans lequel on calcule pour chaque cylindre (il, i2), au cycle de combustion (n) à venir, une correction *(Corr_cyl.i1*$_{[n]}$*, Corr_cyl.i2*$_{[n]}$*)* de la valeur d'un paramètre représentatif de l'injection de carburant dans le cylindre (il, i2) à appliquer sur ledit cycle (n) à venir en fonction desdits écarts *(Err_cyl.i1*$_{[n-1]}$*, Err_cyl.i2*$_{[n-1]}$*)* au cycle (n-1) déjà réalisé de tous les cylindres (il, i2) et d'un coefficient (a) caractérisant la variation des conditions de combustion du moteur entre deux cycles.

2. Procédé selon la revendication 1, dans lequel :

   - on calcule une correction *(Corr_cyl.i1*$_{[n]}$*)* du paramètre représentatif de l'injection de carburant sur un premier cylindre (il) au cycle (n) à venir en fonction dudit écart ($Err\_cyl.i1_{[n-1]}$) dudit cylindre (il) au cycle précédent (n-1) déjà réalisé et dudit écart ($Err\_cyl.i2_{[n-1]}$) du deuxième cylindre (i2) au cycle précédent (n-1) déjà réalisé et d'un coefficient (a) caractérisant la variation des conditions de combustion du moteur entre deux cycles, et
- on calcule une correction ($Corr\_cyl.i2_{[n]}$) du paramètre représentatif de la combustion sur le deuxième cylindre (i) au cycle (n) à venir en fonction dudit écart ($Err\_cyl.i2_{[n-1]}$) dudit cylindre (i2) au cycle précédent (n-1) déjà réalisé et dudit écart ($Err\_cyl.i1_{[n-1]}$) du premier cylindre (il) au cycle précédent (n-1) déjà réalisé et d'un coefficient (a) caractérisant la variation des conditions de combustion du moteur entre deux cycles.

3. Procédé selon la revendication 1 ou 2, dans lequel le coefficient (a) caractérisant la variation des conditions de combustion du moteur entre deux cycles est compris entre 0 et 1.

4. Procédé selon l'une quelconque des revendications précédentes, dans lequel le coefficient (a) dépend d'un gradient de régime, d'un gradient de couple, d'un gradient de la pression du collecteur et d'un gradient de taux de gaz d'échappement recyclés à l'échappement.

5. Procédé selon l'une quelconque des revendications précédentes, dans lequel ledit paramètre représentatif de la combustion dans un cylindre (il, i2) est :

   - un angle de combustion (CA50) de la moitié de la charge dans ledit cylindre ; ou
   - une valeur de couple produit par la combustion de la charge dans ledit cylindre ; ou
   - un délai d'auto-inflammation de la charge dans ledit cylindre.

6. Procédé selon l'une quelconque des revendications précédentes, dans lequel ledit paramètre représentatif de l'injection de carburant dans un cylindre (il, i2) est :

   - le phasage de l'injection de carburant dans ledit cylindre ; ou,
   - la quantité totale de carburant injectée dans ledit cylindre ; ou,
   - la quantité de carburant injectée lors d'une pré-injection dans ledit cylindre.

Europäisches
Patentamt

European
Patent Office

Office européen
des brevets

**RAPPORT DE RECHERCHE EUROPEENNE**

Numéro de la demande

EP 19 19 5613

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/103304 A1 (KANG JUN-MO [US] ET AL) 3 mai 2012 (2012-05-03) * alinéas [0010], [0061] - [0062] * ----- | 1-6 | INV. F02D41/10 F02D41/30 F02D41/40 F02D35/02 |
| X | US 6 286 482 B1 (FLYNN PATRICK F [US] ET AL) 11 septembre 2001 (2001-09-11) * alinéas [0020], [0023], [0025], [0032], [0034], [0036], [0042] - [0043] * ----- | 1-6 | ADD. F02D41/00 |
| A | US 2001/045200 A1 (URUSHIHARA TOMONORI [JP] ET AL) 29 novembre 2001 (2001-11-29) * alinéas [0076] - [0077] * ----- | 1-6 | |

**DOMAINES TECHNIQUES RECHERCHES (IPC)**

F02D

Le présent rapport a été établi pour toutes les revendications

| Lieu de la recherche | Date d'achèvement de la recherche | Examinateur |
|---|---|---|
| La Haye | 16 décembre 2019 | Le Bihan, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 19 5613

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-12-2019

| Document brevet cité au rapport de recherche | | Date de publication | Membre(s) de la famille de brevet(s) | | Date de publication |
|---|---|---|---|---|---|
| US 2012103304 | A1 | 03-05-2012 | CN | 102720596 A | 10-10-2012 |
| | | | DE | 102011116971 A1 | 03-05-2012 |
| | | | US | 2012103304 A1 | 03-05-2012 |
| US 6286482 | B1 | 11-09-2001 | AU | 4082997 A | 26-03-1998 |
| | | | AU | 4158097 A | 06-03-1998 |
| | | | CN | 1233313 A | 27-10-1999 |
| | | | DE | 69735846 T2 | 05-10-2006 |
| | | | EP | 0928369 A1 | 14-07-1999 |
| | | | JP | 3913785 B2 | 09-05-2007 |
| | | | JP | 2000514526 A | 31-10-2000 |
| | | | US | 6286482 B1 | 11-09-2001 |
| | | | WO | 9807973 A1 | 26-02-1998 |
| | | | WO | 9810179 A2 | 12-03-1998 |
| US 2001045200 | A1 | 29-11-2001 | DE | 60117886 T2 | 17-08-2006 |
| | | | EP | 1164271 A2 | 19-12-2001 |
| | | | JP | 3760725 B2 | 29-03-2006 |
| | | | JP | 2001323832 A | 22-11-2001 |
| | | | US | 2001045200 A1 | 29-11-2001 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 1607609 B1